# EUROPEAN PATENT SPECIFICATION

(11) **EP 0 914 760 B1**
(45) Date of publication and mention of the grant of the patent: **18.06.2003**
(21) Application number: 98203628.7
(22) Date of filing: 21.09.1998
(51) Int. Cl.: A01B 39/18, A01B 39/16

(54) **Arrangement for weeding between planted row crops**
Vorrichtung zum Jäten zwischen in Reihen gepflantztes Gewächs
Arrangement de sarclage entre récolte plantée en rangées

(30) Priority: 24.09.1997 NL 1007106; 11.09.1998 NL 1010070
(43) Date of publication of application: 12.05.1999
(73) Proprietor: Dijk, Gerrit Jan, 4023 AG Rijswijk (NL)
(72) Inventor: Dijk, Gerrit Jan, 4023 AG Rijswijk (NL)

(56) References cited:
- DE-A- 3 618 064
- DE-C- 216 962
- FR-A- 389 550
- FR-E- 19 429
- FR-E- 26 314
- US-A- 2 633 790

## Description

The invention relates to an arrangement for weeding between planted or seeded row crops, provided with weed cutting blades which are in operational conditions pulled in an at least substantially horizontal position under ground level along a plant row, which blades are each individually connected via a blade stem to an arm, which arms are hingedly connected to a frame and provided with guiding means, for limiting the movements of the weed cutting blades in a direction towards the plant row.

An arrangement of this kind is known from DE 36 18 064 A. The known arrangement is intended for ploughing between vines and the guiding means are designed for precisely guiding a blade round an individual vine. For that purpose, use is made of a sensor sensing individual vines, coupled to a hydraulic servo system, coupled to the arm onto which the blade is connected.

The present invention is intended for weeding between planted or seeded row crops with short distances between individual plants. In this case it would be practically impossible to weed round individual plants. The inventive weeding arrangement is therefore characterized in that the guiding means comprise substantially rod-shaped objects which are operationally pulled along the plant row and rest against a plurality of plants in that plant row. In this way, the blades can be pulled at a very small distance along the plant row, without the need for an expensive hydraulic servo system.

The inventive arrangement is especially suited for weeding between rows of a crop standing on a relatively strong stem, like maize or young trees, because the crop must be capable of offering at least some resistance to the guiding means, but the force, necessary for steering the blade, is distributed over a plurality of plants, which makes the arrangement well suited for weeding between rows of a relatively young crop.

An arrangement for ploughing between vines is also known from FR 389 550. In the known arrangement, a ploughshare is provided with a projection which will contact a vine when it approaches it and it will push the the ploughshare aside so as not to touch the vine. In this way, the guiding means guides the ploughshare round an individual vine.

An arrangement for weeding provided with guiding means is also known from US 2 633 790, but with this arrangement the guiding means are exclusively used for lifting up the crop, such that the weed cutting blade moving alongside the guiding means will not damage the crop, while the position of the weed cutting blades is solely determined by the driving skills of the driver.

An advantageous embodiment which can very well cope with a possible unevenness of the ground, is characterized in that connecting means of the rod-shaped objects are provided with hinge means, for enabling the rod-shaped objects to move in a vertical direction.

A further advantageous embodiment which aims at reducing the mechanical load of the crop to a minimum, is characterized in that arresting means are provided, like chains or cams, for in operational conditions maintaining a minimum distance between two rod-shaped objects positioned at opposite sides of a plant row. As the forces generated by both cutting blades substantially balance, the positions of the cutting blades will only incidentally, if necessary, be corrected by the rod-shaped objects.

With a mechanically planted or seeded crop the distance between the plant rows in a group or between a group of rows often is exactly the same. An advantageous embodiment which uses this fact is characterized in that the arrangement is provided with two groups of weed cutting blades, a first group in operational conditions being pulled along a first side of a number of plant rows and a second group in operational conditions being pulled along a second side of the plant rows, and that for each group at least one rod-shaped object is provided which is operationally pulled along a plant row and rests against a plurality of plants in that plant row. As an example one may have a first group of four cutting blades, weeding the left sides of four plant rows and a second group of four cutting blades, weeding the right sides.

The invention will now be further explained with reference to the following figures, in which:
- Fig. 1A: represents a first embodiment of the weeding arrangement in top view;
- Fig. 1B: represents the first embodiment of the weeding arrangement in side view;
- Fig. 2: represents in top view a compound weeding arrangement;
- Fig. 3A: represents a second embodiment of the weeding arrangement in top view;
- Fig. 3B: represents the second embodiment of the weeding arrangement in side view.

Fig. 1A shows in top view a first embodiment of the weeding arrangement, comprising a frame 1, on which two arms 3a,3b are hingedly connected with the aid of two clamps 2a,2b and two bearings 4a,4b. Arms 3a,3b are on the other ends provided with vertically disposed blade stems 5a,5b, not visible in the figure, which are on their lower ends provided with two weed cutting blades 6a,6b. In operation, frame 1 is pulled in a known manner by a tractor, such that the arms 3a,3b are disposed substantially horizontally and weed cutting blades 6a,6b are located just below ground level. The aim is to lead the cutting blades 6a,6b at a short distance along a seeded or planted row of crop 7a,7b,7c,.. In order to accomplish this, pushing means are provided on one hand for pushing the arms 3a,3b together and guiding means are provided on the other hand for preventing cutting blades 6a,6b from touching the crop. For pushing the arms together, the arms 3a,3b may be mutually connected by a spring for example, but in this embodiment the force driving the arms together is obtained by the cutting blades 6a,6b themselves, which have been shaped asymmetrically for that purpose. The guiding means are realized as two rod-shaped objects 8a,8b, which operationally glide along the crop and which are connected to the arms 3a,3b. In this situation it is advantageous to guide the rod-shaped objects 8a,8b exactly above ground level, because normally the plants will be the strongest there. In order to achieve this the connections between the rod-shaped objects 8a,8b and the arms 3a,3b are realized with substantially horizontally disposed connecting means 9a,9b, hinges 10a,10b and with substantially vertically disposed connecting means 11a,11b, which are not visible in this figure. Rod-shaped objects 8a,8b will remain close to the ground thanks to this type of connection. As a further improvement the front parts of the rod-shaped objects 8a,8b are bent slightly upwards and outwards. This prevents the rod-shaped objects 8a,8b from getting stuck in an unevenness or from damaging a plant that is located slightly outside the plant row.

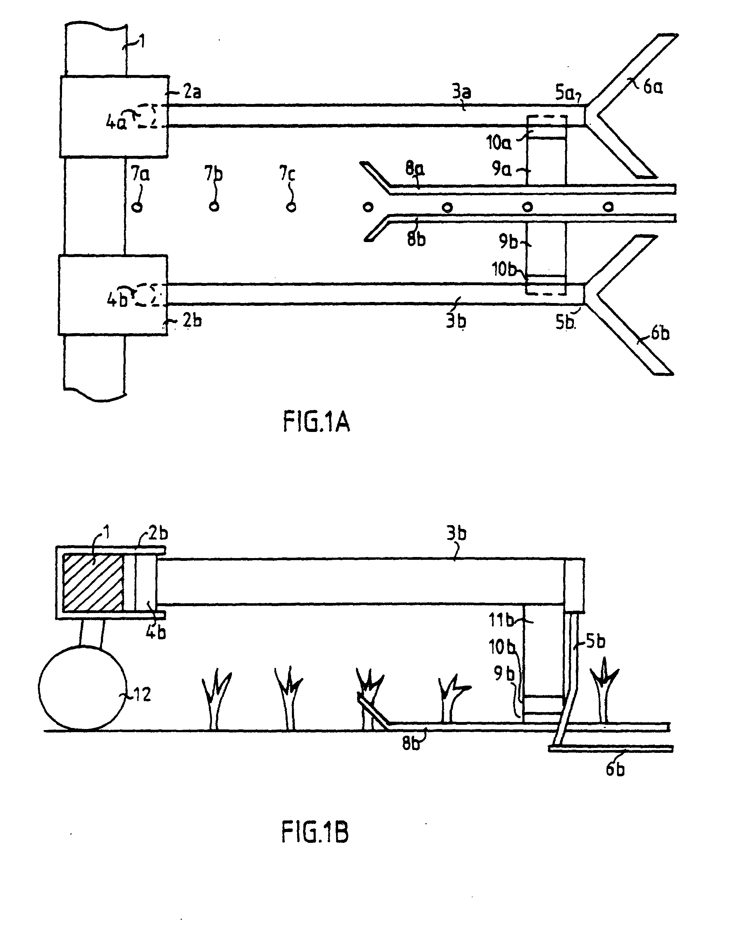

Fig. 1B represents the first embodiment of the weeding arrangement in side view, with frame 1, clamp 2b, arm 3b bearing 4b, blade stem 5b and cutting blade 6b being visible. In operation, frame 1 is provided with wheels, of which one wheel 12 is visible, and is coupled to a tractor via a height adjustment, well known in the art, with which the depth of the cutting blades 6a,6b can be adjusted. In that situation the rod-shaped objects 8a,8b remain exactly above ground level, thanks to the cooperating horizontally disposed connecting means 9a,9b, the hinges 10a, 10b and the substantially vertically disposed connecting means 11a, 11b.

Before a new plant row is weeded the arms 3a,3b are pushed slightly apart. As soon as the tractor moves forward, a force towards the crop is generated by the cutting blades due to their asymmetry, which causes the arms to move towards the row of crop 7a,7b,7c,... This stops as soon as the rod-shaped objects 8a,8b touch the row.

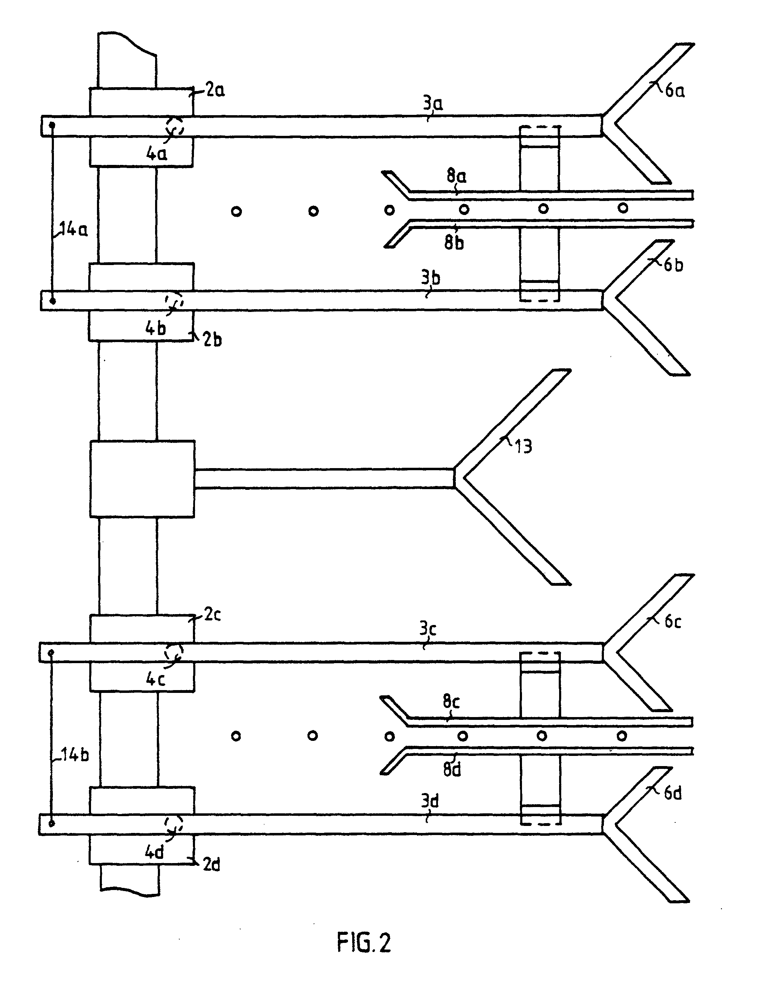

Fig. 2 represents in top view a compound weeding arrangement, which is in this embodiment suited for simultaneously weeding two plant rows with the aid of the movably attached cutting blades 6a,6b,6c,6d and with the fixed cutting blade 13, which is intended for weeding the remaining surface between the plant rows. Cutting blades 6a,6b,6c,6d are connected again via the arms 3a,3b,3c,3d, hinges 4a,4b,4c,4d and clamps 2a,2b,2c,2d to a frame 1, which can be pulled forward by a tractor. Steering of the cutting blades 6a,6b,6c,6d again takes place via the rod-shaped objects 8a,8b,8c,8d.

Due to the shape of the cutting blades 6a,6b,6c,6d the rod-shaped objects 8a,8b,8c,8d are continuously pushed against the row of crop 7a,7b,7c,... It is possible to limit the inward movement in another way, for example by arresting cams between the arms 3a,3b and between 3c,3d or, like here, by arresting chains 14a,14b connected between the forward pointing extensions of the arms 3a,3b,3c,3d. With these arresting means one may for example adjust a minimum distance of five centimetres between the rod-shaped objects 8a,8b. The advantage is that it is no longer necessary for the crop to continuously deliver a counterforce, resulting in a smaller load perceived by the crop.

It will be clear that different combinations may be realized, dependent upon the type of soil and the type of crop. One may for example omit the cutting blades 6a,6d, including the associated parts. One then obtains a weeding arrangement for weeding between two plant rows. Another possibility is, if the stem of the crop is sufficiently strong, to omit the rod-shaped objects 8c,8d and instead mutually connect the arms 3a en 3c and the arms 3b en 3d. Steering for the four cutting blades then takes place exclusively by the rod-shaped objects 8a,8b. One may also weed for example five plant rows at the same time while only one pair of rod-shaped objects 8a,8b follows the central plant row. It is of importance then that the weeding arrangement is built rather light and with bearings having a minimum friction in order to prevent damage to the stems of the crop.

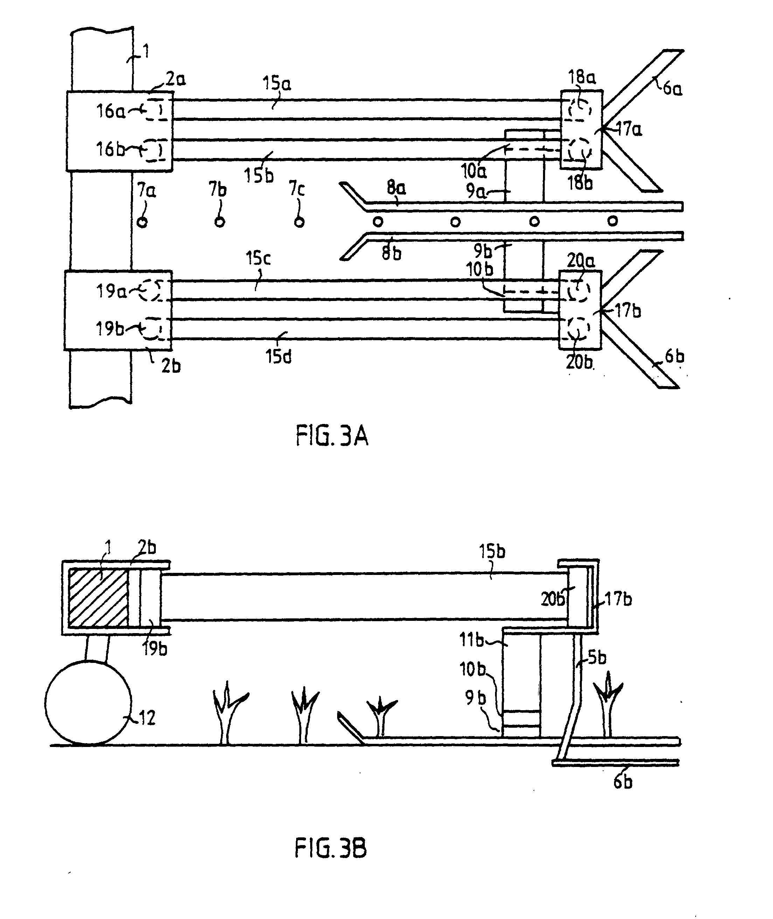

Fig. 3A represents a second embodiment of the weeding arrangement in top view, in which the arms are replaced by pairs of arms 15a,15b and 15c,15d, mounted in parallel. Arms 15a,15b are on one end hingedly connected to clamp 2a by bearings 16a,16b and on the other end provided with a blade holder 17a under application of hinges 18a,18b. Arms 15c,15d are in the same way on one end connected to clamp 2b with the aid of bearings 19a,19b and on the other end provided with a blade holder 17b under application of bearings 20a,20b. This construction, which is known as a parallel guiding, has the effect that the arms 15a,15b and the arms 15c,15d can swing, but that the blade holders 17a,17b and the cutting blades 6a,6b move in parallel and thus remain in the same position. Moreover the rod-shaped objects 8a,8b may now be connected to the blade holders 17a,17b via the horizontal connecting means 9a,9b, hinges 10a,10b and the vertical connecting means 11a,11b. The result is that the weeding arrangement precisely follows the row of crop 7a,7b,7c,.. and that the rod-shaped objects 8a,8b remain parallel to the plant row.

Fig. 3B represents the second embodiment of the weeding arrangement in side view. Visible are the arm 15b, horizontal connecting means 9b, hinge 10b and vertical connecting means 11b, which form a connection to the blade holder 17b.

## Claims

1. Arrangement for weeding between planted or seeded row crops, provided with weed cutting blades (6) which are in operational conditions pulled in an at least substantially horizontal position under ground level along a plant row (7), which blades (6) are each individually connected via a blade stem (5) to an arm (3,15), which arms (3,15) are hingedly connected to a frame (1) and provided with guiding means (8), for limiting the movements of the weed cutting blades (6) in a direction towards the plant row (7), **characterized in that** the guiding means (8) comprise substantially rod-shaped objects which are operationally pulled along the plant row (7) and rest against a plurality of plants **in that** plant row (7).

2. Arrangement according to claim 1, **characterized in that** connecting means (9) of the rod-shaped objects (8) are provided with hinge means (10), for enabling the rod-shaped objects to move in a vertical direction.

3. Arrangement according to claim 1 or 2, **characterized in that** arresting means (14) are provided, like chains or cams, for in operational conditions maintaining a minimum distance between two rod-shaped objects (8) positioned at opposite sides of a plant row (7).

4. Arrangement according to one of the previous claims, **characterized in that** the arrangement is provided with two groups of weed cutting blades (6), a first group in operational conditions being pulled along a first side of a number of plant rows (7) and a second group in operational conditions being pulled along a second side of the plant rows (7), and that for each group at least one rod-shaped object (8) is provided which is operationally pulled along a plant row (7) and rests against a plurality of plants **in that** plant row.

## Patentansprüche

1. Vorrichtung für das Jäten zwischen eingepflanzten oder eingesäten Pflanzenreihen, versehen mit Schuffeln (6), die in einem Gebrauchszustand in einer zumindest im wesentlichen horizontalen Position unter der Bodenoberfläche an einer Pflanzenreihe (7) entlang gezogen werden, welche Schuffeln (6) einzeln mit Hilfe von einem Schuffelstiel (5) mit Armen (3,15) verbunden sind, welche Arme (3,15) über ein Scharniergelenk mit einem Gestell (1) verbunden und mit Führungsmitteln (8) versehen sind, zur Begrenzung der Bewegungen der Schuffeln (6) in Richtung der Pflanzenreihe (7), **dadurch gekennzeichnet, dass** die Führungsmittel (8) ein zumindest im wesentlichen stabförmiges Objekt umfassen, das in einem Gebrauchszustand der Pflanzenreihe (7) entlang gezogen und dabei von einer Anzahl Pflanzen in dieser Pflanzenreihe (7) unterstützt wird.

2. Vorrichtung gemäß Anspruch 1, **dadurch gekennzeichnet, dass** die Verbindungsmittel (9) der stabförmigen Objekte (8) mit Scharniermitteln (10) versehen sind, die eine Bewegung der stabförmigen Objekte in vertikaler Richtung ermöglichen.

3. Vorrichtung gemäß Anspruch 1 oder 2, **dadurch gekennzeichnet, dass** Arretiermittel (14) vorgesehen sind, wie Ketten oder Nocken, für das in einem Gebrauchszustand Aufrechterhalten eines Mindestabstands zwischen zwei stabförmigen, auf beiden Seiten einer Pflanzenreihe (7) positionierten Objekten (8).

4. Vorrichtung gemäß einem der vorangehenden Ansprüche, **dadurch gekennzeichnet, dass** die Vorrichtung mit zwei Gruppen von Schuffeln (6) versehen ist, wobei eine erste Gruppe in einem Gebrauchszustand einer ersten Seite einer Anzahl Pflanzenreihen (7) und eine zweite Gruppe in einem Gebrauchszustand einer zweiten Seite der Pflanzenreihen entlang gezogen wird, und dass jede Gruppe mit zumindest einem stabförmigen Objekt (8) versehen ist, das in einem Gebrauchszustand einer Pflanzenreihe (7) entlang gezogen und dabei von einer Anzahl Pflanzen in dieser Pflanzenreihe (7) unterstützt wird.

## Revendications

1. Dispositif pour arracher entre une récolte rangée, plantée ou semée, prévu de lames (6) pour couper les mauvaises herbes, qui sont en condition de service tirées au-dessous le sol et dans une position sensiblement horizontal le long de la récolte rangée (7), quelles lames (6) sont chacun d'eux attachée par un manche (5) à un bras\ (3,15), et quels bras (3,15) sont monté par une articulation à un châssis (1) et munis de moyens de guidage (8), pour limiter les mouvements des lames (6) dans une direction vers la récolte rangée, **caractérisé en ce que** les moyens de guidage (8) comprennent un objet au moins sensiblement en forme de barre, qui est en condition de service tirés le long de la récolte rangée (7) en s'appuyant contre une multiple des plants dans cette récolte rangée (7).

2. Dispositif tel que revendiqué à la revendication 1, **caractérisé en ce que** moyens de fixation (9) des objets en forme de barre (8) sont munis de moyens d'articulation (10), pour permettre les objets en forme de barre de se déplacer dans une direction vertical.

3. Dispositif tel que revendiqué à la revendication 1 ou 2, **caractérisé en ce que** des moyens d'arrêt (14) sont prévus, comme des chaînes ou cames, pour maintenir une distance minimum entre deux objets en forme de barre (8) positionnés au côtés opposés d'une récolte rangée (7) en condition de service.

4. Dispositif tel que revendiqué dans un des revendications ci-dessus, **caractérisé en ce que** le dispositif est prévu de deux groupes de lames (6), un premier groupe qui est en condition de service tiré le long d'un premier côté d'un nombre des récoltes rangées (7) et un deuxième groupe qui est en condition de service tiré le long d'un deuxième côté des récoltes rangées (7), et que pour chaque groupe au moins un objet en forme de barre (8) est prévu que est tiré le long d'une récolte rangée (7) en s'appuyant en condition de service contre une multiple des plants dans cette récolte rangée (7).
